# EUROPEAN PATENT SPECIFICATION

(11) **EP 1 237 736 B1**
(45) Date of publication and mention of the grant of the patent: **12.08.2009**
(21) Application number: 00987315.9
(22) Date of filing: 29.11.2000
(51) Int. Cl.: B60C 11/11, B60C 11/13

(54) **TYRE FOR VEHICLE WHEELS, PARTICULARLY FOR MEDIUM AND HEAVY MOTOR VEHICLES SUCH AS LORRIES AND SIMILAR**
FAHRZEUGRÄDERLUFTREIFEN, INSBESONDERE FÜR MITTEL-KRAFTFAHRZEUG WIE Z.B. LASTKRAFTFAHRZEUGE UND DERGLEICHEN
PNEU POUR ROUES DE VEHICULE, PARTICULIEREMENT POUR VEHICULES A MOTEUR POIDS MOYEN ET LOURD, TELS QUE DES CAMIONS ET ANALOGUES

(30) Priority: 30.11.1999 EP 99830743; 19.01.2000 US 176628 P
(43) Date of publication of application: 11.09.2002
(73) Proprietor: Pirelli Tyre S.p.A., 20126 Milano (IT)
(72) Inventor: BETTIOL, Flavio Junior, CEP-09812-330 Sao Paolo (BR); CAMPANA, Luigi, I-20154 Milano (IT)
(74) Representative: Giannesi, Pier Giovanni
(86) International application number: PCT/EP2000/011896
(87) International publication number: WO 2001/039994

(56) References cited:
- EP-A- 0 468 815
- WO-A-98/33669
- US-A- 3 939 890
- US-A- 5 316 062

## Description

The present invention relates to a tyre for motor vehicles, and more particularly to a tyre for heavy motor vehicles such as lorries and similar, used both on roads and on rough ground such as that generally present in quarries and/or on building sites.

More particularly, the present invention relates to tyres to be used on the driving axles, generally the rear axles, of the aforesaid vehicles.

WO 9833669 corresponding with the preamble of claim 1, discloses a pneumatic agricultural tire for an industrial type tractor or like vehicle has a plurality of central lugs and a plurality of shoulder lugs. The plurality of central lugs are arranged in a circumferentially continuous row and extend across the equatorial plane. Each central lug is similar in shape and orientation relative to each circumferentially adjacent central lug. Each central lug has a leading edge and a trailing edge. The leading edges of each lug are located on an opposite of the equatorial plane relative to the trailing edge of the same central lug. The plurality of shoulder lugs are divided into first and second rows and project radially outwardly from the inner tread and extend from the lateral tread edges toward the equatorial plane of the tire. The shoulder lugs have an axially inner end being axially spaced from a leading end and a trailing end of the axially adjacent central lugs. The lugs in conjunction with the central lugs have constant radii of curvature R1 and R2 on each tread half The curvatures R1 and R2 provide nondirectional performance capability of the tread.

In the remainder of the present description and in the following claims, the expression "elastomeric material" is intended to denote a rubber mixture as a whole, in other words one containing at least one base polymer, reinforcing fillers, and further process additives such as accelerators, anti-ageing agents and crosslinking agents used for manufacturing and curing the tyre.

As is known, medium and heavy motor transport vehicles, such as lorries, are generally fitted with tyres whose types differ according to whether they are to be fitted on axles of the driving type or of the driven type, this differentiation being due to the difference in performance and behavioural characteristics required from tyres according to the axles on which they are fitted.

For example, the tyres fitted on the driven axles are primarily required to have a high directional stability, low abradability, to provide good mileage, and high tear resistance, together with a good grip and lateral roadholding on rough ground, for example on muddy and/or sandy ground.

To achieve these objectives, use is made of tyres having a tread of the type called "grooved", in other words a tread provided with grooves of the circumferential type, with a rectilinear or zigzag configuration, which form on the tread a plurality of circumferential ribs, in other words a plurality of continuous circumferential ribs which normally do not have transverse incisions extending over their whole width.

On the other hand, tyres fitted on the driving wheels have a tread of what is known as the "block" type, since a plurality of blocks is provided, formed by a combination of circumferential grooves intersected by transverse grooves, of considerable width; the dimensions and orientation of these transverse grooves have a considerable effect on the gripping action exerted by the tread on the ground.

Tyres fitted on the driving axles are generally required to have high traction and good roadholding, particularly on loose ground such as that normally present in quarries and/or on building sites.

A further requirement, increasingly manifested on the market and in the legislation of various countries, is for a significant reduction in the noise threshold of the tyre during its normal use on road routes. In this respect it is known that tyres of the "block" type generally have a higher noise level than tyres of the "grooved" type.

A tyre for medium and heavy motor transport vehicles is also generally required to have high regularity of wear, a good mileage, and high tear resistance, together with a tread design capable of effectively expelling stones and/or debris which may be trapped within the grooves formed in the tread.

This is because the continued presence of such stones and/or debris may cause perforations in the tread and, over a period of time, give rise to irreversible damage to the underlying belt layers.

An example of the documents known in the prior art and relating to tyres of the "block" type for medium and heavy motor transport vehicles is Italian patent No. 1,245,773 in the name of the present applicant.

This patent describes a tread comprising at least four rows of blocks delimited by at least three circumferential grooves of different widths, the narrowest two being located laterally, on opposite sides of the equatorial plane of the tyre, in an axially outward position, and by a plurality of oblique transverse grooves connecting adjacent pairs of circumferential grooves.

In this embodiment, the narrow groove separating the two lateral rows of blocks on each shoulder of the tyre is characterized in that it has a width of not more than 2.5 mm and a depth not exceeding that of the oblique transverse grooves, while the blocks of the two lateral rows are staggered circumferentially with respect to each other, so that each block of each row is next to two consecutive blocks of the adjacent row.

In a different embodiment described in this document, two additional, axially inner, circumferential grooves are also provided; these delimit a circumferential rib on whose sides are formed oblique transverse grooves extending to the equatorial plane, in such a way as to impart to this rib the appearance of two adjacent rows of blocks.

The blocks of all the rows have an ordered configuration, in that all the longitudinal sides of the blocks belonging to a given row are positioned in two planes parallel to the equatorial plane.

In a further embodiment, the two rows of blocks of the central rib are joined together to form a single row of blocks passing through the equatorial plane. In a further embodiment, the blocks of the central rib have an essentially hexagonal shape.

Another tyre for lorries, known from US Patent 4,412,574, has a tread which comprises two blocks adjacent in the transverse direction, one being longer than the other, and such that the shorter block follows the longer one, followed in the circumferential direction by another two adjacent blocks whose order is the reverse of the preceding ones: in other words, the longer block follows the shorter block. This configuration is repeated over the whole longitudinal extension of the tread. These pairs of blocks are delimited by transverse grooves which extend between the shoulders of the tread.

The applicant has tackled the problem of improving the traction of a tyre of the "block" type for medium and heavy motor transport vehicles without adversely affecting the other desired characteristics mentioned above, such as the mileage, the silent running and the tear resistance.

The applicant has found that the traction of a tyre of the "block" type can advantageously be increased by providing the tread with a plurality of transverse grooves which extend from one shoulder of the tyre to the other, each groove being such that it comprises a pair of full-depth lateral portions which come to occupy part of the central body of the tread, which is normally used for the formation of the central blocks.

The applicant has found that these full-depth lateral portions of the said plurality of transverse grooves represent optimal traction elements for gripping the ground. Additionally, in order to maintain the "block" characteristic in all areas of the tread, and therefore also in the central area of the tread, while ensuring a high mileage, the applicant has found that it is helpful to interconnect the said lateral portions of the transverse grooves by means of a central portion whose depth is less than that of the two lateral portions, and in any case is a few millimetres.

This is because providing a central transverse grooved portion of limited depth makes it possible to ensure a high mileage, since adjacent blocks of the central row of the tread are more firmly fixed together, thus opposing in a more effective way the deforming forces exerted on the tread by the ground.

This configuration imparts properties of robustness and abrasion resistance to the central row of blocks, while allowing this row of blocks to bend elastically in the circumferential direction to absorb the roughness of the ground.

The applicant has also found that it is possible to achieve more silent running of the tread by making use of particular configurations of the said central portion of each transverse groove, in such a way that the lateral portions of this groove are staggered with respect to each other.

In one of its aspects, the present invention relates to a tyre for vehicle wheels, particularly for driving wheels of heavy motor transport vehicles, comprising:
a carcass structure including a central crown portion and two axially opposed sidewalls; a belt structure associated coaxially with said carcass structure; a tread extending coaxially around said belt structure and moulded with a relief design comprising a plurality of transverse grooves, which delimit a corresponding plurality of transverse ribs, and at least two circumferential series of incisions inclined with respect to the circumferential direction and formed in said transverse ribs to delimit at least three rows of blocks, namely two axially outer rows and a central row essentially lying across the equatorial plane (Y-Y) of said tyre, each block having an essentially polygonal shape delimited by two longitudinal sides extending in an essentially circumferential direction and two front and rear transverse edges, the axially outer ends of said two longitudinal sides of the blocks of said central row lying on two planes (k, k') parallel to each other and parallel to said equatorial plane at a predetermined constant distance w, each transverse groove extending over the whole width W of said tread and comprising a central portion, located between a pair of consecutive blocks of said central row, and a pair of lateral portions, said lateral portions being located between respective pairs of consecutive blocks of said two axially outer rows, and having, along their respective mid-lines, a depth (h) and transverse width (l) which are greater 'than the depth (h1) and transverse width (l1) of said central portions and of said at least two circumferential series of inclined incisions, two lateral portions of each transverse groove are staggered with respect to each other in the circumferential direction:
a) the mid-lines axes of said two lateral portions of the transverse grooves have a zig-zag configuration;
b) the axially inner ends of said pair of lateral portions being staggered with respect to each other in the circumferential direction by a value w2 in the range from 60% to 70% of the pitch p of the design of said tread.

According to the present invention, the blocks of the central row are essentially in the shape of parallelograms.
Preferably, the axially inner ends of said two lateral portions of said transverse grooves lie on two planes which are parallel to each other and parallel to said equatorial plane, said parallel planes lying within said central row of blocks at a distance of w 1<w from each other.

In a further embodiment, the tyre according to the invention comprises two further circumferential series of inclined incisions, located axially outside the said at least two circumferential series of inclined incisions, the plurality of the said circumferential series of inclined incisions forming a total of five rows of blocks, namely one central row lying across the said equatorial plane, two shoulder rows and two intermediate rows located between the said central row and the said shoulder rows.

Further characteristics and advantages will be more clearly evident in the light of the description of a preferred embodiment of the present invention.

This description, given below, relates to the attached drawings, provided solely for the purpose of explanation and without any restrictive intent, in which:
- Fig. 1: shows, in partial cross section, the structure of a tyre according to the invention;
- Fig. 2: shows a partial plan view of a tread according to the invention;
- Fig. 3: shows a partial cross section of Fig. 2, through the plane following the line III-A-B-C-D-III;
- Fig. 4: shows a partial cross section of Fig. 2 through the plane IV-IV;
- Fig. 5: shows a partial cross section of Fig. 2 through the plane V-V;
- Fig. 6: shows a partial cross section of Fig. 2 through the plane VI-VI;
- Fig. 7: shows a partial cross section of Fig. 2 through the plane VII-VII;
- Fig. 8: shows a partial cross section of Fig. 2 through the plane VIII-VIII;
- Fig. 9: shows a partial cross section of Fig. 2 through the plane IX-IX;
- Fig. 10: shows a partial cross section of Fig. 2 through the plane X-X;
- Fig. 11: shows a succession of gripping edges, in a given pitch and for a given direction of travel, applied to the partial plan view of Fig. 2.

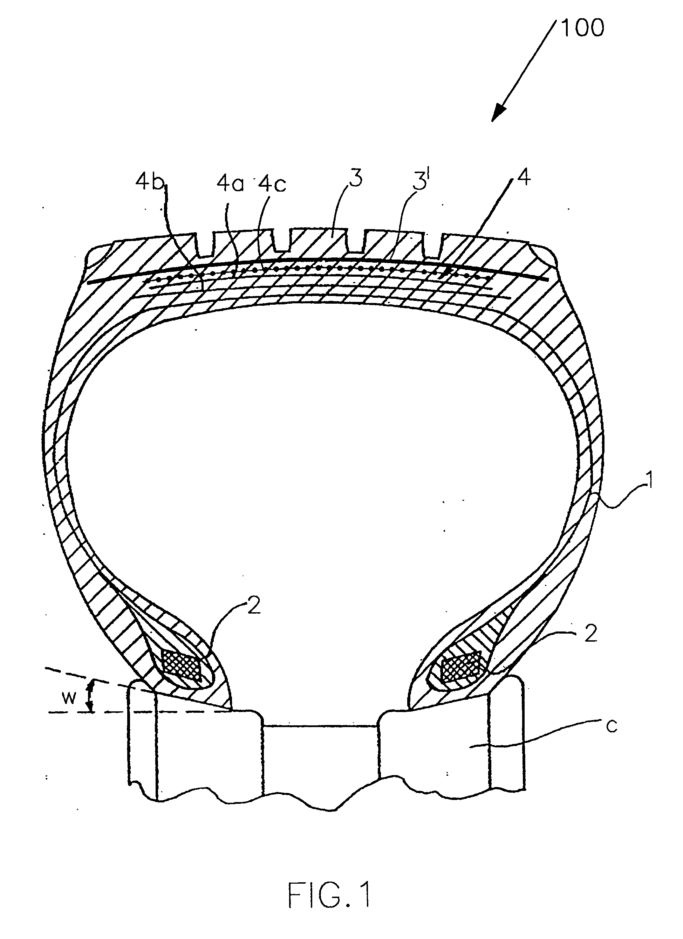

Figure 1 shows a tyre for motor vehicles, designed to be fitted on the rear driving wheel of a motor vehicle for medium or heavy load, for example of a lorry of the type used in quarries and/or on building sites. The dimensional parameters indicated below relate, purely by way of example, to a tread associated with a new prototype tyre of the 13 R 22.5 specification, where 13 indicates the maximum width, in other words the maximum chord, of the tyre, expressed in inches, the said tyre being fitted on the recommended rim and inflated to its nominal operating pressure. However, the ranges of the cited values relate to the generic tyre according to the invention.

The tyre 100 comprises a carcass of toroidal shape, generally consisting of a single reinforcing ply 1 provided with metal cords lying in radial planes, in other words containing the axis of rotation of the tyre. The ends of the carcass 1 are turned axially, from the inside towards the outside, around two metal annular cores 2, usually known as bead cores, which form the reinforcement of the beads, in other words of the radially inner edges of the said tyre. As is known, the beads enable the tyre to be fitted on the corresponding fitting rim C. In Fig. 1, the tyre 100, of the tubeless type, is fitted on a rim of what is known as the "channel" type, in which the supporting bases for the beads of the tyre diverge conically outwards at an angle ω of approximately 15°. A tread 3 of elastomeric material, within which is formed a relief pattern providing the ground contact of the tyre 100, is positioned on the crown of the said carcass 2. The tread 3, and the design imparted to it, must be such as to provide the aforesaid tyre with good traction, high mileage, silent running and regularity of wear. The tread 3 has a predetermined thickness and is delimited by an outer surface, designed to contact the ground, and an inner surface placed in contact with a strip 3' made from elastomeric material and designed to promote the necessary adhesion between the elastomeric material of the tread 3 and what is known as the belt package 4a, 4b, 4c.

The aforesaid belt package is a circumferentially inextensible annular reinforcing structure, placed between the carcass 1 and the tread 3. Generally, the belt package comprises at least two radially superimposed layers 4a, 4b of rubberized fabric, provided with internal metal reinforcing cords. In each layer 4a, 4b, the said cords are placed parallel to each other, and cross over the cords of the adjacent layer; preferably, these cords are placed symmetrically with respect to the equatorial plane of the tyre. Preferably, the aforesaid belt package has a further, third layer 4c of metal cords of the high-elongation type, wound circumferentially on the underlying belt layers, or only in the axially outer positions, in such a way that it is wound round only the edges of the aforesaid underlying layers. This further layer performs the function of opposing the forces, acting in the tyre in operating conditions, which are related to inflation pressure and to centrifugal force, and imparts the necessary handling properties, particularly during cornering.

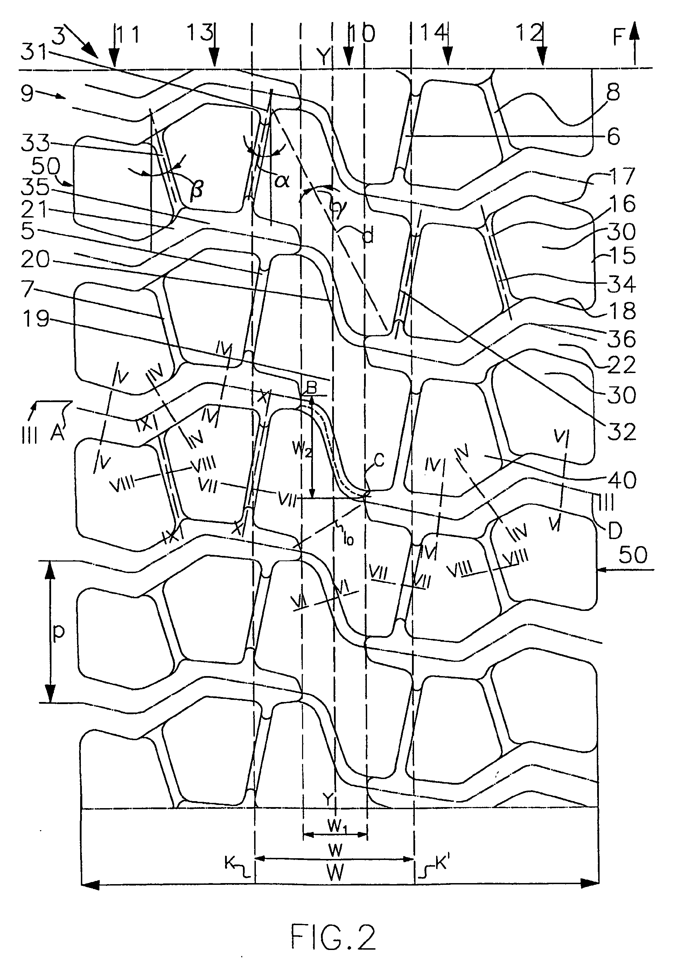

Fig. 2 shows, in a partial plan view, the tread 3 in one embodiment of the present invention. This tread 3 comprises a plurality of circumferential grooves 9, which extend over the whole width W of the said tread 3 and which delimit a corresponding plurality of transverse ribs 50, and four circumferential series of incisions 5, 6, 7, 8 which are inclined with respect to the circumferential direction and are formed in the said transverse ribs 50 to form five rows of blocks, namely one central row 10 lying across the equatorial plane Y-Y, two shoulder rows 11, 12 located at the edges of the said tread 3, and two intermediate rows 13, 14 contained between the said central row 10 and the shoulder rows 11, 12.

More specifically, in the embodiment shown in Figure 2 the mid-line axes 31, 32 of the axially inner series of incisions 5, 6 are parallel to each other and inclined at an angle α to the circumferential direction. Preferably the said angle α is in the range from 5° to 15°.

According to the aforesaid embodiment, the mid-line axes 33, 34 of the axially outer series of incisions 7, 8 are parallel to each other and inclined, in a direction opposite that of the aforesaid mid-line axes 31, 32, at an angle β to the circumferential direction. Preferably the said angle β is in the range from 10° to 20°.

Each transverse groove 9 comprises a central portion 20, lying across the equatorial plane Y-Y and delimited by two consecutive blocks 19 belonging to the aforesaid central row 10, and two lateral portions 21, 22, linked to the central portion 20 on opposite sides of the equatorial plane Y-Y and delimited, respectively, by two consecutive blocks 40 of the intermediate rows 13, 14 and two consecutive blocks 30 of the shoulder rows 11, 12.

The said blocks 19, 30, 40, whose sequence forms the aforesaid plurality of transverse ribs 50, have shapes of the polygonal type which are delimited by a pair of essentially longitudinal sides 15, 16 and by a pair of edges, a front one 17 and a rear one 18, where the direction of rolling of the tyre is indicated by F (Figure 2). In the rows of intermediate and shoulder blocks positioned on one side of the equatorial plane Y-Y, the aforesaid front and rear edges of adjacent blocks 30, 40 belonging to a single transverse rib 50 are in positions which are the inverse of each other with respect to the circumferential direction. This means, for example, that the front edge 17 of the block 30, when rotated through 180°, is essentially identical to the rear edge 18 of the block 40. The same relationship is also established between the rear edge 18 of the block 30 and the front edge 17 of the block 40. Furthermore, as shown in Figure 2, the blocks belonging to the intermediate rows positioned on opposite sides of the equatorial plane Y-Y have front and rear edges which are inverted with respect to each other. For example, the front edge 17 of a block 40 of the intermediate row 13 has an essentially pointed shape identical to the shape of the rear edge 18 of a block 40 of the intermediate row 14. A similar situation is found in the case of the blocks belonging to the shoulder rows positioned on opposite sides of the equatorial plane Y-Y. For example, the front edge 17 of a block 30 of the shoulder row 11 has a shape identical to that of the rear edge 18 of a block 30 of the shoulder row 12.

Additionally, the axially outer edges of the longitudinal sides 15, 16 of the blocks 19 belonging to the central row 10 lie in two planes k, k' which are parallel to each other and parallel to the equatorial plane Y-Y. The distance between the aforesaid planes k, k' is constant and equal to w.

The mid-line axes 35, 36 of the two lateral portions 21, 22 respectively of the transverse groove 9 have a zigzag configuration delimited by a sequence of three rectilinear portions; additionally, the mid-line 36 of the lateral portion 22 of the said transverse groove 9 is rotated through 180°, relative to the circumferential direction, with respect to the mid-line 35 of the lateral portion 21.

In the embodiment shown in Figure 2, the shapes and sizes of the transverse grooves 9 are identical to each other.

As stated above, the axially inner ends of the lateral portions 21, 22 of each transverse groove 9 are joined to the ends of the corresponding central portion 20. Additionally, the said axially inner ends of the lateral portions 21, 22 are spaced from each other by a distance w₁<w, and are also circumferentially staggered with respect to each other by a predetermined distance w₂.

For some embodiments of the present invention, Table 1 shows the preferred ranges of the aforesaid values w, w₁ and w₂, and their ratios to the overall width W of the tread 3 and to the pitch p of the repetition of the relief design of the aforesaid tread in the circumferential direction.

**Table 1**

| Value | Preferred range of values |
|---|---|
| w (mm) | 72 - 80 |
| w/W | 0.25 - 0.35 |
| w₁ (mm) | 30 - 32 |
| w₁/W | 0.115 - 0.125 |
| w₂ (mm) | 40 - 55 |
| w₂/p | 0.6 - 0.7 |

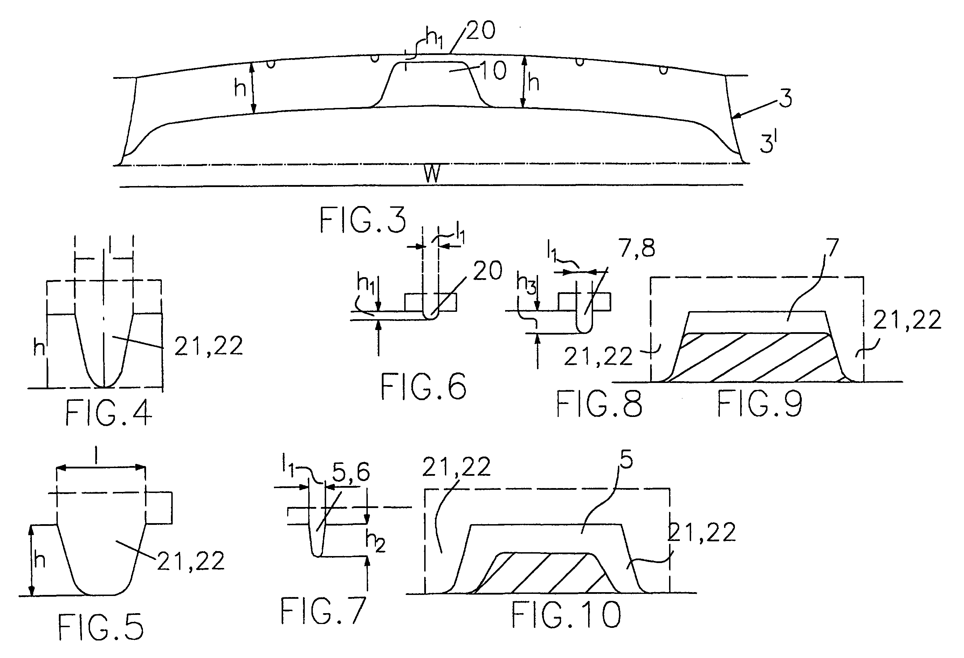

Additionally, the lateral portions 21, 22 of each transverse groove 9 have a depth h and width 1 (see Figures 4 and 5), measured orthogonally to the mid-lines 35 and 36 respectively, which are greater than the corresponding dimensions of the central portion 20 of the said transverse groove 9 and of the aforesaid inclined incisions 5, 6, 7, 8.

In fact, if the depths of the central portion 20 of each transverse groove 9 and of the inclined incisions 5, 6 and 7, 8 are indicated, respectively, by h₁ (see Figure 6), h₂ (see Figure 7), and h₃ (see Figure 8), the said depths are less than h and, more precisely, it is found that h₁<h₃<h₂<h.

In the embodiment shown in Figure 2, the central portion 20 of the transverse grooves 9 and the inclined incisions 5, 6, 7, 8 also have the same width l₁.

For some embodiments of the present invention, Table 2 shows preferred embodiments of the aforesaid values of depth and width of the transverse grooves 9 and of the inclined incisions 5, 6, 7, 8.

**Table 2**

| Value | Preferred range of values |
|---|---|
| h (mm) | 18 - 24 |
| l* (mm) | 15 - 22 |
| l/p | 22% - 26% |
| h₁ (mm) | 2 - 6 |
| h₂ (mm) | 7 - 15 |
| h₃ (mm) | 4 - 10 |
| l₁ (mm) | 3 - 8 |

Preferably, h is equal to 21 mm, l/p is equal to 24%, h₁ is equal to 3 mm, h₂ is equal to 9 mm, h₃ is equal to 6 mm, and l₁ is equal to 2.5 mm.

The blocks 40 of the intermediate rows 13, 14 and the blocks 30 of the shoulder rows 11, 12 have an essentially pentagonal shape, while the blocks 19 of the central row 10 are essentially in the shape of parallelograms, elongated in the circumferential direction. More particularly, the said blocks 19 have a configuration determined by a diagonal d running between the axially inner ends of the essentially longitudinal sides 15, 16, the said diagonal d forming an angle γ with the circumferential direction. Preferably, the said angle γ is in the range from 22° to 35°.

The design of the tread 3 according to the present invention, as shown clearly in Figure 2, is such that the portion to the right of the equatorial plane Y-Y corresponds exactly to the portion to the left of the said plane, rotated through 180° with respect to the equatorial plane.

Consequently, the tyre according to the invention does not have a preferred direction of travel.

In the tread 3 according to the present invention, the lateral portions 21, 22 of the transverse grooves 9 extend to occupy part of the central area of the said tread. By way of example only, in the embodiment shown in Figure 2 the two lateral portions 21, 22 represent 87% of the width W of the tread 3. More particularly, the difference w-w₁ provides a measurement of the extent to which the aforesaid lateral portions 21, 22 extend into the central row 10.

Consequently, since these lateral portions also occupy part of the central area of the tread, and since, as stated above, the length 1 and the depth h of these lateral portions are markedly greater than the length and depth of the central portion 20 and of the inclined incisions 5, 6, 7 and 8, these aspects enable the properties of traction and lateral roadholding of the tyre according to the invention to be advantageously enhanced.

It should also be pointed out that the aforesaid increase in traction is achieved without adversely affecting the mileage of the tyre, owing to the particular robustness of the central row 10.

In fact, as shown in Figures 2, 3 and 6, the central portion 20 of each transverse groove 9 has dimensions (depth and width) which are considerably smaller than those of the lateral portions 21, 22.

In one embodiment of the invention, for example, the central portion 20 has a depth of 3 mm, while the lateral portions 21, 22 have a depth of 21 mm.

This means that the central row 10 acts as a solid continuous rib, in spite of the presence of the blocks 19, since, owing to the very limited depth (3 mm) of the central portion 20, the aforesaid blocks are firmly fixed to the base of the rib and essentially without flexural mobility, which is a primary cause of wear of the tread design.

The resulting row of central blocks can effectively withstand the stresses exerted on the tyre by the ground, and can therefore yield a high mileage.

Moreover, the staggering of the lateral portions 21, 22 of each transverse groove 9 in the circumferential direction (this staggering being indicated by the value w₂) imparts a considerable tear resistance to the blocks 19 of the central row 10.

This is because, as shown in Figure 2, the staggering w₂ between the axially inner ends of the lateral portions 21, 22 corresponds to a width l₀ of each block 19 which is greater than w₁. This means that, owing to the presence of the circumferential staggering w₂ and therefore owing to the inclined configuration of the blocks 19 with respect to the equatorial plane, these blocks have a larger quantity of elastomeric material than they would have if this circumferential staggering were not present. The aforesaid larger quantity of elastomeric material of the blocks 19 imparts to these blocks a higher resistance to the mechanical stresses exerted by the ground on the tread 3 in operating conditions.

As shown by Figure 2, the blocks and grooves of the tread according to the present invention are linked together by portions of the curvilinear type having radii of curvature preferably in the range from 2 mm to 10 mm, and more preferably from 4 mm to 8 mm. The presence of these links of the curvilinear type is particularly advantageous in terms of uniformity and wear of the tyre.

The tread according to the invention also has advantageous characteristics of low noise.

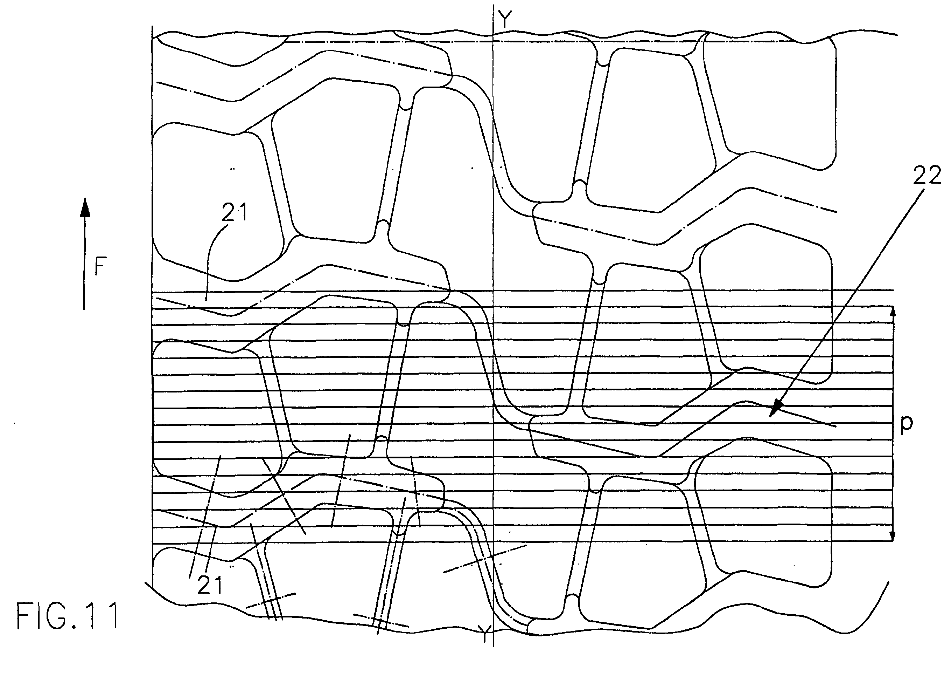

Figure 11 shows a partial plan view of a tread 3 according to the invention, in the embodiment shown in Figure 2. The said Figure 11 shows a plurality of lines positioned perpendicularly to the equatorial plane Y-Y, representing the advance of the impact edges of the tread of the tyre on the ground during the travel of the tyre.

With reference to the direction of rolling F of Figure 11, the advance of the impact edges shows, for example, that the lateral portion 22 of the transverse groove 9 starts to grip when a corresponding lateral portion 21 of the same transverse groove 9 has practically terminated its gripping action. It can also be seen that two separate transverse grooves are gripping simultaneously when one of the two is in the final gripping phase and the other is in the initial gripping phase.

The said transverse grooves 9 therefore tend to operate in succession, preventing the development of discontinuities, for example in respect of performance in terms of roadholding and noise, due to a simultaneous entry and/or exit of different ground gripping elements.

This means that the continuous traction of the tread is advantageously ensured in any direction of travel of the tyre, thus improving the comfort, stability of travel and mileage.

Together with the aforesaid noise reduction, the progressive gripping of the ground by the traction elements ensures a more regular wear of the tread, with a consequent increase in the mileage of the tyre according to the invention.

As mentioned above in the present description, the incisions 5 and 6 have a greater depth than the incisions 7 and 8. For example, in a particular embodiment, the incisions 5 and 6 have a depth of 9 mm, while the incisions 7 and 8 have a depth of 6 mm, whereas the maximum depth of the transverse grooves 9 is 21 mm. The depth of the incisions 5, 6 is therefore chosen in such a way that for half of the life of the tyre the intermediate blocks 40 are released from the adjacent central blocks 10, improving the flexibility of the tread 3, while the depth of the incisions 7, 8 is chosen in such a way as to make the shoulder blocks 30 integral with the adjacent intermediate blocks 40, thus improving the tear resistance of the tread 3 according to the invention.

Additionally, the shape and dimensions of the transverse grooves 9 are chosen in such a way as to make them self-cleaning, to remove stones and/or debris which may be trapped in the said grooves during the travel of the tyre.

This result is achieved by using a high value of the minimum width 1 and by providing the said transverse grooves with lateral walls which converge towards the base, the said walls forming an angle of at least 30° between them.

More particularly, in order to ensure optimal self-cleaning of the said transverse grooves, the width of these grooves increases (see Figure 2) at the shoulder ends.

It is clear, therefore, that the present invention has made it possible to integrate into the tread design certain design characteristics which oppose each other - each being negative with respect to at least one of the different behaviours required from the tyre, since it is positive only in respect of a single aspect of its behaviour - in a synergic combination, which provides an exclusively positive overall outcome, in other words one equal to or better than that found in known tyres, in respect of any aspect of the behaviour on the road.

A person skilled in the art, having understood the invention as described above, will be capable of making all the necessary choices, variations and modifications of the variables associated with the invention, to resolve the specific technical problem faced by him, in other words to give priority to one specific aspect of behaviour (for example aquaplaning rather than silent running, by increasing the depth of the inclined incisions, or the traction rather than the wear, by increasing the depth and/or width of the transverse grooves, etc.) according to the severity of the operating conditions and/or the particular type of application of the vehicle which is to be fitted with the tyres according to the invention.

## Claims

1. Tyre for vehicle wheels, particularly for driving wheels of heavy motor transport vehicles, comprising:
a carcass structure (1) including a central crown portion and two axially opposed sidewalls; a belt structure (4a, 4b, 4c) associated coaxially with said carcass structure; a tread (3) extending coaxially around said belt structure and moulded with a relief design comprising a plurality of transverse grooves (9), which delimit a corresponding plurality of transverse ribs (50), and at least two circumferential series of incisions (5, 6) inclined with respect to the circumferential direction and formed in said transverse ribs to delimit at least three rows of blocks, namely two axially outer rows and a central row (10) essentially lying across the equatorial plane (Y-Y) of said tyre, each block having an essentially polygonal shape delimited by two longitudinal sides (15, 16) extending in an essentially circumferential direction and two front (17) and rear (18) transverse edges, the axially outer ends of said two longitudinal sides of the blocks (19) of said central row (10) lying on two planes (k, k') parallel to each other and parallel to said equatorial plane at a predetermined constant distance w, each transverse groove (9) extending over the whole width W of said tread and comprising a central portion (20), located between a pair of consecutive blocks of said central row (10), and a pair of lateral portions (21, 22), said lateral portions being located between respective pairs of consecutive blocks of said two axially outer rows, and having, along their respective mid-lines, a depth (h) and transverse width (l) which are greater than the depth (h₁) and transverse width (l₁) of said central portions and of said at least two circumferential series of inclined incisions,
said two lateral portions (21,22) of each transverse groove (9) are staggered with respect to each other in the circumferential direction;
**characterized in that**:
a) the mid-lines axes (35, 36) of said two lateral portions (21, 22) of the transverse grooves (9) have a zig-zag configuration;
b) the axially inner ends of said pair of lateral portions being staggered with respect to each other in the circumferential direction by a value w₂ in the range from 60% to 70% of the pitch p of the design of said tread.

2. Tyre according to Claim 1, **characterized** that the tread comprises two further circumferential series of inclined incisions (7, 8), located axially outside said at least two circumferential series of inclined incisions (5, 6), the plurality of said circumferential series of inclined incisions forming a total of five rows of blocks, namely one central row (10) lying across said equatorial plane, two shoulder rows (11, 12) and two intermediate rows (13, 14) located between said central row and said shoulder rows;

3. Tyre according to Claim 1, **characterized** that the blocks (19) of the central row (10) are essentially in the shape of parallelograms.

4. Tyre according to Claim 1, **characterized in that** the axially inner ends of said two lateral portions (21, 22) of said transverse grooves (9) lie on two planes which are parallel to each other and parallel to said equatorial plane, said parallel planes lying within said central row of blocks at a distance of w₁<w from each other.

5. Tyre according to Claim 1, **characterized in that** the depth (h₁) and transverse width (l₁) of said central portion (20) are less than the corresponding dimensions of said at least two circumferential series of inclined incisions (5, 6).

6. Tyre according to Claim 1, **characterized in that** the distance (w) between said axially outer ends of said two longitudinal sides (15, 16) of said blocks (19) of the central row (10) is not less than 25% of the width (W) of said tread.

7. Tyre according to Claim 6,**characterized in that** said distance (w) is in the range from 72 mm to 80 mm.

8. Tyre according to Claim 4, **characterized in that** said distance w₁ between said axially inner ends of said pair of lateral portions (21, 22) of each transverse groove (9) is in the range from 11.5% to 12.5% of the width (W) of said tread.

9. Tyre according to Claim 1, **characterized in that** the depth (h) of said pair of lateral portions (21, 22) is in the range from 18 mm to 24 mm.

10. Tyre according to Claim 1, **characterized in that** the transverse width of said pair of lateral portions (21, 22) is in the range from 15 mm to 22 mm.

11. Tyre according to Claim 2, **characterized in that** the transverse width of said pair of lateral portions (21, 22) is at least in the range from 22% to 26% of the value of the pitch p of the design of said tread.

12. Tyre according to Claim 1, **characterized in that** the blocks (40) of the intermediate rows (13, 14) and the blocks (30) of the shoulder rows (11, 12) have an essentially pentagonal shape.

13. Tyre according to Claim 1, **characterized in that** the axially inner ends of said pair of literal portions (21, 22) are staggered with respect to each other in the circumferential direction by a value in the range from 40 mm to 55 mm.

14. Tyre according to Claim 1, **characterized in that** the width in the axial direction of said central portion (20) is not more than 32 mm.

15. Tyre according to Claim 1, **characterized in that** the depth of said central portion (h₁) is not more than 6 mm.

16. Tyre according to Claim 1, **characterized in that** the width of said at least two circumferential series of inclined incisions (5, 6) is not more than 8 mm.

17. Tyre according to Claim 1, **characterized in that** the maximum depth of said at least two circumferential series of inclined incisions (5, 6) is 15 mm.

18. Tyre according to Claim 1, **characterized in that** the widths of said at least two circumferential series of inclined incisions (5, 6) and of said central portion (20) are equal.

19. Tyre according to Claim 2, **characterized in that** the depth of said two further circumferential series of inclined incisions (7, 8) is less than the depth of said at least two circumferential series of inclined incisions (5,6).

20. Tyre according to Claim 2, **characterized in that** the depth of said two further circumferential series of inclined incisions (7,8) is in the range from 4 mm to 10 mm.

21. Tyre according to Claim 2, **characterized in that** the widths of said two further circumferential series of inclined incisions (7, 8) are equal to the widths of said at least two circumferential series of inclined incisions (5, 6).

22. Tyre according to Claim 2, **characterized in that** the mid-line axes of said at least two circumferential series of inclined incisions (5, 6) are inclined at an angle (α) of 5° to 15° with respect to the circumferential direction.

23. Tyre according to Claim 2, **characterized in that** the mid-line axes of said two further circumferential series of inclined incisions (7, 8) are inclined at an angle (β) of 10° to 20° with respect to the circumferential direction.

24. Tyre according to Claim 2, **characterized in that** the mid-line axes of said at least two circumferential series of inclined incisions (5, 6) are inclined with respect to the circumferential direction in the opposite direction to the mid-line axes of said two further circumferential series of inclined incisions (7, 8).

25. Tyre according to Claim 1, **characterized in that** the mid-line axis of a lateral portion (21) of said pair of lateral portions is rotated through 180° relative to the circumferential direction with respect to the mid-line axis of the other lateral portion (22) of said pair of lateral portions.

26. Tyre according to Claim 1, **characterized in that** the shapes and dimensions of said transverse grooves (9) are identical to each other.

27. Tyre according to Claim 1, **characterized in that** the shape of each block (19) of said central row (10) is essentially a parallelogram having a diagonal (d), running between the axially inner ends of said essentially longitudinal sides (15, 16), which forms an angle (γ) with respect to the circumferential direction.

28. Tyre according to Claim 27, **characterized in that** said angle (γ) is in the range from 22° to 35°.

## Patentansprüche

1. Reifen für Fahrzeugräder, im Besonderen für Antriebsräder für Schwerkrafttransportfahrzeuge, umfassend:
eine Karkassenstruktur (1), die einen zentralen Kronenabschnitt und zwei axial gegenüberliegende Seitenwände enthält; eine Gürtelstruktur (4a, 4b, 4c), die koaxial der Karkassenstruktur zugeordnet ist; eine Lauffläche (3), die sich koaxial um die Gürtelstruktur erstreckt und mit einer Profilgestalt ausgeformt ist, die eine Mehrzahl von Querrillen (9), die eine entsprechende Mehrzahl von Querrippen (50) begrenzen, und wenigstens zwei Umfangsserien von Einschnitten (5, 6) umfasst, die bezüglich der Umfangsrichtung schräg sind und in den Querrippen ausgebildet sind, um wenigstens zwei Reihen von Blöcken abzugrenzen, und zwar zwei axiale Außenreihen und eine zentrale Reihe (10), die im wesentlichen über der Äquatorebene (Y-Y) des Reifens liegen, wobei jeder Block im Wesentlichen eine Polygonalgestalt aufweist, die durch zwei longitudinale Seiten (15, 16), die sich im Wesentlichen in Umfangsrichtung erstrecken, und zwei vordere (17) und hintere Querkanten (18) begrenzt ist, wobei die axialen Außenenden der zwei longitudinalen Seiten der Blöcke (19) der zentralen Reihe (10) auf zwei Ebenen (k, k') liegen, die parallel zueinander und parallel zum Äquator in einem vorbestimmten konstanten Abstand w verlaufen, wobei sich jede Querrille (9) über die gesamte Breite W der Lauffläche erstreckt und einen Zentralabschnitt (20), der zwischen einem Paar von fortlaufenden Blöcken der Zentralreihe (10) positioniert ist, und ein Paar von seitlichen Abschnitten (21, 22) umfasst, wobei die seitlichen Abschnitte zwischen entsprechenden Paaren von fortlaufenden Blöcken der zwei axialen Außenreihen positioniert sind und entlang deren entsprechenden Mittellinien eine Tiefe (h) und eine Querbreite (l) aufweisen, die größer als die Tiefe (h₁) und Querbreite (l₁) der Zentralabschnitte und der wenigstens zwei Umfangsserien von schrägen Einschnitten sind,
wobei die zwei seitlichen Abschnitte (21, 22) von jeder Querrille (9) in der Umfangsrichtung bezüglich einander versetzt sind;
**dadurch gekennzeichnet, dass**:
a) die Mittellinienachsen (35, 36) der zwei seitlichen Abschnitte (21, 22) der Querrillen (9) einen Zickzackaufbau aufweisen;
b) die axialen Innenenden des Paars der seitlichen Abschnitte bezüglich einander in der Umfangsrichtung um einen Wert w₂ im Bereich von 60% bis 70% der Teilung des Designs der Lauffläche versetzt sind.

2. Reifen nach Anspruch 1, **dadurch gekennzeichnet, dass** die Lauffläche zwei weitere Umfangsserien von schrägen Einschnitten (7, 8) umfasst, die axial außerhalb der wenigstens zwei Umfangsserien von schrägen Einschnitten (5, 6) positioniert sind, wobei die Mehrzahl von Umfangsserien der schrägen Abschnitte eine Gesamtheit von fünf Reihen von Blöcken ausbilden, und zwar eine zentrale Reihe (10), die über der Äquatorebene liegt, zwei Schulterreihen (11, 12) und zwei Zwischenreihen (13, 14), die zwischen der zentralen Reihe und den Schulterreihen positioniert sind.

3. Reifen nach Anspruch 1, **dadurch gekennzeichnet, dass** die Blöcke (19) der zentralen Reihe (10) im Wesentlichen die Gestalt von Parallelogrammen aufweisen.

4. Reifen nach Anspruch 1, **dadurch gekennzeichnet, dass** die axialen Innenenden der zwei seitlichen Abschnitte (21, 22) der Querrillen (9) auf zwei Ebenen liegen, die parallel zueinander und parallel zur Äquatorebene verlaufen, wobei die parallelen Ebenen in der zentralen Reihe der Blöcke in einem Abstand von w₁ < w voneinander liegen.

5. Reifen nach Anspruch 1, **dadurch gekennzeichnet, dass** die Tiefe (h₁) und die Querbreite (l₁) des zentralen Abschnitts (20) kleiner sind als die entsprechenden Abmessungen der wenigstens zwei Umfangsserien der schrägen Einschnitte (5, 6).

6. Reifen nach Anspruch 1, **dadurch gekennzeichnet, dass** der Abstand (w) zwischen den axialen Außenenden der zwei longitudinalen Seiten (15, 16) der Blöcke (19) der zentralen Reihe (10) nicht kleiner als 25% der Breite (W) der Lauffläche sind.

7. Reifen nach Anspruch 6, **dadurch gekennzeichnet, dass** der Abstand (w) sich im Bereich von 72 mm bis 80 mm befindet.

8. Reifen nach Anspruch 4, **dadurch gekennzeichnet, dass** der Abstand (w₁) zwischen den axialen Innenenden des Paars der seitlichen Abschnitte (21, 22) von jeder Querrille (9) sich im Bereich von 11,5% bis 12,5% der Breite (W) der Lauffläche befindet.

9. Reifen nach Anspruch 1, **dadurch gekennzeichnet, dass** die Tiefe (h) des Paars der seitlichen Abschnitte (21, 22) sich im Bereich von 18 mm bis 24 mm befindet.

10. Reifen nach Anspruch 1, **dadurch gekennzeichnet, dass** die Querbreite des Paars von seitlichen Abschnitten (21, 22) sich im Bereich von 15 mm bis 22 mm befindet.

11. Reifen nach Anspruch 2, **dadurch gekennzeichnet, dass** die Querbreite des Paars von seitlichen Abschnitten (21, 22) sich wenigstens im Bereich von 22% bis 26% des Werts der Teilung (p) des Designs der Lauffläche befindet.

12. Reifen nach Anspruch 1, **dadurch gekennzeichnet, dass** die Blöcke (40) der Zwischenreihen (13, 14) und die Blöcke (30) der Schulterreihen (11, 12) im Wesentlichen eine fünfeckige Gestalt aufweisen.

13. Reifen nach Anspruch 1, **dadurch gekennzeichnet, dass** die axialen Innenenden des Paars von seitlichen Abschnitten (21, 22) voneinander in der Umfangsrichtung um einen Wert in dem Bereich 40 mm bis 55 mm versetzt sind.

14. Reifen nach Anspruch 1, **dadurch gekennzeichnet, dass** die Breite in der Axialrichtung des zentralen Abschnitts (20) nicht größer als 32 mm ist.

15. Reifen nach Anspruch 1, **dadurch gekennzeichnet, dass** die Tiefe des zentralen Abschnitts (h₁) nicht größer als 6 mm ist.

16. Reifen nach Anspruch 1, **dadurch gekennzeichnet, dass** die Breite der wenigstens zwei Umfangsserien der schrägen Einschnitte (5, 6) nicht größer als 8 mm ist.

17. Reifen nach Anspruch 1, **dadurch gekennzeichnet, dass** die maximale Tiefe der wenigstens zwei Umfangsserien der schrägen Einschnitte (5, 6) 15 mm beträgt.

18. Reifen nach Anspruch 1, **dadurch gekennzeichnet, dass** die Breiten der wenigstens zwei Umfangsserien der schrägen Einschnitte (5, 6) und des zentralen Abschnitts (20) gleich sind.

19. Reifen nach Anspruch 2, **dadurch gekennzeichnet, dass** die Tiefe der zwei weiteren Umfangsserien der schrägen Abschnitte (7, 8) kleiner als die Tiefe der wenigstens zwei Umfangsserien der schrägen Einschnitte (5, 6) ist.

20. Reifen nach Anspruch 2, **dadurch gekennzeichnet, dass** die Tiefe der zwei weiteren Umfangsserien von schrägen Einschnitten (7, 8) sich im Bereich von 4 mm bis 10 mm befindet.

21. Reifen nach Anspruch 2, **dadurch gekennzeichnet, dass** die Breiten der zwei weiteren Umfangsserien von schrägen Einschnitten (7, 8) gleich den Breiten der wenigstens zwei Umfangsserien von schrägen Einschnitten (5, 6) sind.

22. Reifen nach Anspruch 2, **dadurch gekennzeichnet, dass** die Mittellinienachsen der wenigstens zwei Umfangsserien von schrägen Einschnitten (5, 6) um einem Winkel (α) von 5° bis 15° bezüglich der Umfangsrichtung geneigt sind.

23. Reifen nach Anspruch 2, **dadurch gekennzeichnet, dass** die Mittellinienachsen der zwei weiteren Umfangsserien der schrägen Abschnitten (7, 8) um einem Winkel (β) von 10° bis 20° bezüglich der Umfangsrichtung geneigt sind.

24. Reifen nach Anspruch 2, **dadurch gekennzeichnet, dass** die Mittellinienachsen der wenigstens zwei Umfangsserien der schrägen Einschnitte (5, 6) bezüglich der Umfangsrichtung in der entgegengesetzten Richtung zu den Mittellinienachsen der zwei weiteren Umfangsserien der schrägen Einschnitte (7, 8) schräg sind.

25. Reifen nach Anspruch 1, **dadurch gekennzeichnet, dass** die Mittellinienachse des seitlichen Abschnitts (21) des Paars von seitlichen Abschnitten um 180° relativ zur Umfangsrichtung bezüglich der Mittellinienachse des anderen seitlichen Abschnitts (22) des Paars von seitlichen Abschnitten gedreht ist.

26. Reifen nach Anspruch 1, **dadurch gekennzeichnet, dass** die Gestalten und Abmessungen der Querrillen (9) einander identisch sind.

27. Reifen nach Anspruch 1, **dadurch gekennzeichnet, dass** die Gestalt von jedem Block (19) der zentralen Reihe (10) im Wesentlichen ein Parallelgramm ist, das eine Diagonale (d) aufweist, die zwischen den axialen Innenenden der im Wesentlichen longitudinalen Seiten (15, 16) verläuft, wodurch ein Winkel (γ) bezüglich der Umfangsrichtung ausgebildet wird.

28. Reifen nach Anspruch 27, **dadurch gekennzeichnet, dass** der Winkel (γ) sich im Bereich von 22° bis 35° befindet.

## Revendications

1. Pneumatique pour roues de véhicules, en particulier pour roues motrices de véhicules de transport à moteur lourds, comprenant :
une structure de carcasse (1) comprenant une partie de couronne centrale et deux parois latérales axialement opposées ; une structure de ceinture (4a, 4b, 4c) associée de façon coaxiale à ladite structure de carcasse ; une bande de roulement (3) s'étendant de façon coaxiale autour de ladite structure de ceinture et moulée avec un motif en relief comprenant une pluralité de rainures transversales (9), qui délimitent une pluralité correspondante de nervures transversales (50), et au moins deux séries circonférentielles d'incisions (5, 6) inclinées par rapport à la direction circonférentielle et formées dans lesdites nervures transversales de façon à délimiter au moins trois rangées de blocs, à savoir deux rangées axialement extérieures et une rangée centrale (10) s'étendant essentiellement sur le plan équatorial (Y-Y) dudit pneumatique, chaque bloc ayant une forme essentiellement polygonale délimitée par deux côtés longitudinaux (15, 16) s'étendant dans une direction essentiellement circonférentielle et deux bords transversaux avant (17) et arrière (18), les extrémités axialement extérieures desdits deux côtés longitudinaux des blocs (19) de ladite rangée centrale (10) s'étendant sur deux plans (k, k') parallèles entre eux et parallèles audit plan équatorial à une distance constante prédéterminée w, chaque rainure transversale (9) s'étendant sur la totalité de la largeur W de ladite bande de roulement et comprenant une partie centrale (20), située entre une paire de blocs consécutifs de ladite rangée centrale (20), et une paire de parties latérales (21, 22), lesdites parties latérales étant situées entre des paires respectives de blocs consécutifs desdites deux rangées axialement extérieures, et ayant, le long de leurs lignes médianes respectives, une profondeur (h) et une largeur transversale (l) qui sont supérieures à la profondeur (h₁) et à la largeur transversale (l₁) desdites parties centrales et desdites séries circonférentielles au nombre d'au moins deux d'incisions inclinées,
lesdites deux parties latérales (21, 22) de chaque rainure transversale (9) étant étagées l'une par rapport à l'autre dans la direction circonférentielle ;
**caractérisé en ce que** :
a) les axes de ligne médiane (35, 36) desdites deux parties latérales (21, 22) des rainures transversales (9) ont une configuration en zig-zag ;
b) les extrémités axialement intérieures de ladite paire de parties latérales étant étagées l'une par rapport à l'autre dans la direction circonférentielle d'une valeur w₂ située dans la plage comprise entre 60% et 70% du pas p du motif de ladite bande de roulement.

2. Pneumatique selon la revendication 1, **caractérisé en ce que** la bande de roulement comprend deux séries supplémentaires circonférentielles d'incisions inclinées (7, 8), situées axialement à l'extérieur desdites séries circonférentielles au nombre d'au moins deux d'incisions inclinées (5, 6), la pluralité desdites séries circonférentielles d'incisions inclinées formant un total de cinq rangées de blocs, à savoir une rangée centrale (10) s'étendant sur ledit plan équatorial, deux rangées d'épaulement (11, 12) et deux rangées intermédiaires (13, 14) situées entre ladite rangée centrale et lesdites rangées d'épaulement.

3. Pneumatique selon la revendication 1, **caractérisé en ce que** les blocs (19) de la rangée centrale (10) sont essentiellement sous la forme de parallélogrammes.

4. Pneumatique selon la revendication 1, **caractérisé en ce que** les extrémités axialement intérieures desdites deux parties latérales (21, 22) desdites rainures transversales (9) s'étendent sur deux plans qui sont parallèles entre eux et parallèles audit plan équatorial, lesdits plans parallèles s'étendant à l'intérieur de ladite rangée centrale de blocs à une distance mutuelle w₁ < w.

5. Pneumatique selon la revendication 1, **caractérisé en ce que** la profondeur (h₁) et la largeur transversale (l₁) de ladite partie centrale (20) sont inférieures aux dimensions correspondantes desdites séries circonférentielles au nombre d'au moins deux d'incisions inclinées (5, 6).

6. Pneumatique selon la revendication 1, **caractérisé en ce que** la distance (w) entre lesdites extrémités axialement extérieures desdits deux côtés longitudinaux (15, 16) desdits blocs (19) de la rangée centrale (10) n'est pas inférieure à 25% de la largeur (W) de ladite bande de roulement.

7. Pneumatique selon la revendication 6, **caractérisé en ce que** ladite distance (w) est situé dans la plage comprise entre 72 mm et 80 mm.

8. Pneumatique selon la revendication 4, **caractérisé en ce que** ladite distance w₁ entre lesdites extrémités axialement intérieures de ladite paire de parties latérales (21, 22) de chaque rainure transversale (9) est située dans la plage comprise entre 11,5% et 12,5% de la largeur (W) de ladite bande de roulement.

9. Pneumatique selon la revendication 1, **caractérisé en ce que** la profondeur (h) de ladite paire de parties latérales (21, 22) est située dans la plage comprise entre 18 mm et 24 mm.

10. Pneumatique selon la revendication 1, **caractérisé en ce que** la largeur transversale de ladite paire de parties latérales (21, 22) est située dans la plage comprise entre 15 mm et 22 mm.

11. Pneumatique selon la revendication 2, **caractérisé en ce que** la largeur transversale de ladite paire de parties latérales (21, 22) est au moins située dans la plage comprise entre 22% et 26% de la valeur du pas p du motif de ladite bande de roulement.

12. Pneumatique selon la revendication 1, **caractérisé en ce que** les blocs (40) des rangées intermédiaires (13, 14) et les blocs (30) des rangées d'épaulement (11, 12) ont une forme essentiellement pentagonale.

13. Pneumatique selon la revendication 1, **caractérisé en ce que** les extrémités axialement intérieures de ladite paire de parties latérales (21, 22) sont étagées entre elles dans la direction circonférentielle d'une valeur située dans la plage comprise entre 40 mm et 55 mm.

14. Pneumatique selon la revendication 1, **caractérisé en ce que** la largeur dans la direction axiale de ladite partie centrale (20) n'est pas supérieure à 32 mm.

15. Pneumatique selon la revendication 1, **caractérisé en ce que** la profondeur de ladite partie centrale (h₁) n'est pas supérieure à 6 mm.

16. Pneumatique selon la revendication 1, **caractérisé en ce que** la largeur desdites séries circonférentielles au nombre d'au moins deux d'incisions inclinées (5, 6) n'est pas supérieure à 8 mm.

17. Pneumatique selon la revendication 1, **caractérisé en ce que** la profondeur maximale desdites séries circonférentielles au nombre d'au moins deux d'incisions inclinées (5, 6) est de 15 mm.

18. Pneumatique selon la revendication 1, **caractérisé en ce que** les largeurs desdites séries circonférentielles au nombre d'au moins deux d'incisions inclinées (5, 6) et de ladite partie centrale (20) sont égales.

19. Pneumatique selon la revendication 2, **caractérisé en ce que** la profondeur desdites deux séries circonférentielles supplémentaires d'incisions inclinées (7, 8) est inférieure à la profondeur desdites séries circonférentielles au nombre d'au moins deux d'incisions inclinées (5, 6).

20. Pneumatique selon la revendication 2, **caractérisé en ce que** la profondeur desdites deux séries circonférentielles supplémentaires d'incisions inclinées (7, 8) est située dans la plage comprise entre 4 mm et 10 mm.

21. Pneumatique selon la revendication 2, **caractérisé en ce que** les largeurs desdites deux séries circonférentielles supplémentaires d'incisions inclinées (7, 8) sont égales aux largeurs desdites séries circonférentielles au nombre d'au moins deux d'incisions inclinées (5, 6).

22. Pneumatique selon la revendication 2, **caractérisé en ce que** les axes de ligne médiane desdites séries circonférentielles au nombre d'au moins deux d'incisions inclinées (5, 6) sont inclinées d'un angle (α) de 5° à 15° par rapport à la direction circonférentielle.

23. Pneumatique selon la revendication 2, **caractérisé en ce que** les axes de ligne médiane desdites deux séries circonférentielles supplémentaires d'incisions inclinées (7, 8) sont inclinées d'un angle (β) de 10° à 20° par rapport à la direction circonférentielle.

24. Pneumatique selon la revendication 2, **caractérisé en ce que** les axes de ligne médiane desdites séries circonférentielles au nombre d'au moins deux d'incisions inclinées (5, 6) sont inclinés par rapport à la direction circonférentielle dans la direction opposée à celle des axes de ligne médiane desdites deux séries circonférentielles supplémentaires d'incisions inclinées (7, 8).

25. Pneumatique selon la revendication 1, **caractérisé en ce que** l'axe de ligne médiane d'une partie latérale (21) de ladite paire de parties latérales est tourné de 180° par rapport à la direction circonférentielle vis-à-vis de l'axe de ligne médiane de l'autre partie latérale (22) de ladite paire de parties latérales.

26. Pneumatique selon la revendication 1, **caractérisé en ce que** les formes et les dimensions desdites rainures transversales (9) sont identiques entre elles.

27. Pneumatique selon la revendication 1, **caractérisé en ce que** la forme de chaque bloc (19) de ladite rainure centrale (10) est essentiellement un parallélogramme ayant une diagonale (d), s'étendant entre les extrémités axialement intérieures desdits côtés essentiellement longitudinaux (15, 16), qui forme un angle (γ) par rapport à la direction circonférentielle.

28. Pneumatique selon la revendication 27, **caractérisé en ce que** ledit angle (γ) est situé dans la plage comprise entre 22° et 35°.
